# EUROPEAN PATENT SPECIFICATION

(11) **EP 0 624 042 B1**
(45) Date of publication and mention of the grant of the patent: **09.08.2000**
(21) Application number: 93107461.1
(22) Date of filing: 07.05.1993
(51) Int. Cl.: H04N 9/64, H04N 11/16, H04N 9/83

(54) **A television signal compatible with a conventional television standard signal, method of transmitting the television signal and equipment for processing the television signal**
Fernsehsignal welches kompatibel ist mit einem Standardfernsehsignal, Verfahren zur Übertragung dieses Fernsehsignals und Vorrichtung zur Verarbeitung des Fernsehsignals
Signal de télévision compatible avec un signal de télévision standard, procédé de transmission du signal de télévision et équipement de traitement du signal vidéo

(43) Date of publication of application: 09.11.1994
(60) Divisional application: 00100665.9
(73) Proprietor: SONY DEUTSCHLAND GmbH, 50829 Köln (DE)
(72) Inventor: Buchner, Peter, Dipl.-Ing., W-7250 Leonberg 7 (DE); Sato, Masahiko, W-7050 Waiblingen (DE)
(74) Representative: Müller, Frithjof E., Dipl.-Ing.

(56) References cited:
- EP-A- 0 469 805
- EP-A- 0 509 390
- WO-A-91/16793
- WO-A-92/20193
- WO-A-93/04561
- DE-A- 4 000 790
- US-A- 5 122 885

## Description

The invention relates to an improvement of a television signal of a new standard, which includes a first signal component representing a picture having usual vertical resolution of a conventional television standard such as, for instance, PAL standard, which signal can be reproduced by a television receiver for the conventional standard, a second signal component to be utilized in video equipments for the new television standard such as video cassette recorders or television receivers so as to improve the vertical resolution of the picture recorded or reproduced thereby, and an information data signal for controlling video equipments for the conventional or new television standard. The invention further relates to a method of transmitting such the improved new standard television signal and to a video equipment for processing the improved new standard television signal.

So-called "PAL PLUS" system is being developed. The proposed PAL PLUS system are described in the following articles: "Der Weg zu PAL-plus - Eine kompatible Verbessrung des PAL-Systems" by A. Ziemer and E. Matzel, FERNSEH- UND KINO-TECHNIK, 43 Jahrgang Nr. 8/1989; "Ein wichtiger Schritt zum 16:9-Breitbild" by Von Dr. Dietrich Westerkamp and Frans W. P. Vreeswijk, Funkschau 18/1991; "PALplus - eine vollkompatible Weiterentwicklung des PAL-Farbfernsehens" by Ulrich Reimers, Charles P. Sandbank and Albrecht Ziemer, FERNSEH- UND KINO-TECHNIK, 45 Jahrgang Nr. 8/1991; "Breitbild-PAL mit vertikaler Bandaufspaltung" by Th. Herfet, FERNSEH- UND KINO-TECHNIK, 46 Jahrgang Nr. 10/1992; "PALplus: Übertragung von 16:9-Bildern im terrestrischen PAL-Kanal" by A. Ebner, E. Matzel, R. Morcom, R. Ochs, U. Riemann, M. Silverberg, R. Storey, F. Vreeswijk and D.Westerkamp, FERNSEH- UND KINO-TECHNIK, 46 Jahrgang Nr. 11/1992; and "Bandaufspaltung zur Rasterkonversion für eine PALplus-Übertragung" by Chr. Hentschel, FERNSEH- UND KINO-TECHNIK, 46 Jahrgang Nr. 11/1992.

Simply speaking, in the present proposal of the PAL PLUS system, a picture signal representing a studio picture source of a wide aspect ratio 16:9 having the active 575 lines per frame is separated by vertical filtering to perform a line down conversion of 3/4 into a first picture component signal (luminance and chrominance) providing a usual vertical resolution of a picture which is displayed in a letter box size by 430 lines in a television screen of a normal aspect ratio 4:3 and by vertical filtering to perform a line down conversion of 1/4 into a second picture component signal (luminance only) improving a vertical resolution of a picture which is displayed in a full size by 575 lines in a television screen of the wide aspect ratio according to the first picture component signal. The first picture component signal is coded according to the PAL standard and transmitted during 430 active line periods in the middle of each frame of a television signal of total 625 lines and the second picture component signal, so called "helper signal" is subjected to a carrier suppressed side band amplitude modulation of one of the color sub-carrier signals, preferably the sub-carrier signal having a constant signal phase for the color difference signal U, and transmitted at the black level during the remaining upper 72 and lower 72 line periods of the each frame.

A conventional PAL standard television receiver (hereinafter PAL-TV receiver) of the normal aspect ratio can display a picture in a letter-box size represented by the first picture component signal during the middle 430 lines on the screen. The helper signal transmitted in the upper 72 and lower 72 line periods can be seen in principle as black panels adjacent the picture.

On the other hand, a conventional PAL standard television receiver having the wide aspect ratio or a tailored PAL PLUS system television receiver (hereinafter PAL PLUS-TV receiver) having the wide aspect ratio can display a picture represented by the first picture component signal in a full size on the screen by means of zooming processing by increasing the vertical deflection amplitude. The vertical resolution of this picture, however, is same as that of the above picture in the letter box size. In the tailored PAL PLUS-TV receiver, in order to improve the vertical resolution, the helper signal is demodulated, subjected to a line up conversion of 4/1, and combined with the first picture component signal subjected to a line conversion of 4/3 so that a higher resolution picture of the wide aspect ratio can be displayed in the active 575 lines.

In order to control the conventional PAL-TV receiver of the wide aspect ratio or the tailored PAL PLUS-TV receiver of the wide aspect ratio, the information data signal is transmitted in a certain format during the line 23 of the PAL PLUS system television signal (hereinafter PAL PLUS-TV signal). By the way, the lines 7 to 22 of each field are already assigned for teletext or VITS data. The information data signal may contain information of the aspect ratio of the pitcure transmitted, transmission of the helper signal, encoding of the color plus, and so on, which are not presently transmitted in the PAL standard television signal (hereinafter PAL-TV signal). Such the information data signal should be correctly transmitted and finally received at the PAL-TV receiver or the PAL PLUS-TV receiver so that those television receivers are correctly controlled.

Meanwhile, even after the PAL PLUS-TV signal transmission becomes in service, the PAL PLUS-TV signal is likely recorded by a current video signal recorder such as a video cassette recorder designed for the PAL standard (hereinafter current VCR). Even if the PAL PLUS-TV signal including the information data signal is supplied to the current VCR which itself as a matter of course has not taken account of the PAL PLUS-TV signal and has no function to distinguish the PAL PLUS-TV signal from the PAL-TV signal, the PAL PLUS-TV signal is recorded within the extent of the specification of PAL-TV signal and the same reproduced is forwarded to the PAL PLUS-TV receiver. The PAL PLUS-TV signal reproduced from the current VCR is, therefore, much transformed or distorted due to the recordable frequency band, unstable time base, and signal processing such as line comb filtering of the current VCR so as not to be correctly reproduced in the PAL PLUS-TV receiver anymore to fulfill the specification of the PAL PLUS system. Accordingly, the reproduced picture quality becomes deteriorated even in comparison with that reproduced as the PAL-TV signal.

Document DE-A-4 000 790 discloses a colour video signal processor to be used in a PAL-VCR that adds an additional detection signal to the signal to be recorded, the additional detection signal having a predetermined phase depending on one of two modi of the luminance signal included in the signal to be recorded, to be able to correctly process the recorded luminance signal after reproduction according to the phase of the additional detection signal.

According to the invention, this problem is solved by providing the new standard television signal such as, for example, the PAL PLUS-TV signal with an additional signal, by means of which it can be detected that the new standard television signal supplied to a video equipment for the new standard through an improper transmission medium is not suitable to be processed as the new standard television signal.

Claims 1 and 2 specify the signal in accordance with the invention, claims 9 and 10 specify a method for transmitting said signal, and claims 17 and 18 specify equipment for processing said signal.

One way of carrying out the invention is described in detail below with reference to drawings which illustrate only one specific embodiment, in which:
Fig. 1 is a schematic block diagram showing the recording side of the currect VCR.
Fig. 2 is a schematic diagram for explaining the phase shift process in the recording side of the current VCR.
Fig.3 is a schematic block diagram showing the reproducing side of the currect VCR.
Fig. 4 is a schematic diagram for explaining the phase shift process in the reproducing side of the current VCR.
Fig. 5 is a schematic diagram showing the information data signal and the additional signal of an embodiment of the improved new standard television signal according to the invention.
Fig. 6 is a block diagram showing an embodiment of the video equipment according to the invention.

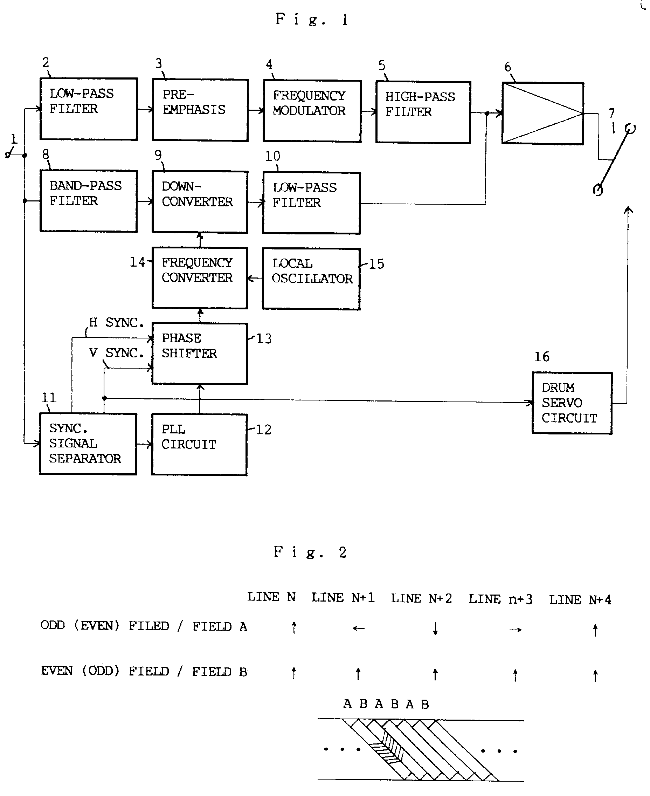

Referring to Figs. 1 to 3, the signal processing of the current VCR will be simply explained in connection with the invention in order to make the invention to be understood more easily. In the recording side of the current VCR as shown in Fig. 1, the luminance signal is separated from the composite baseband video signal supplied to the input terminal 1 by the low pass filter 2 and frequency modulated by the frequency modulator 4 after subjected to a pre-emphasis by the pre-emphasis circuit 3. The frequency modulated luminance signal is limited its frequency band by the high pass filter 5 so as not to overlap the chrominance signal which frequency band is down-converted as described below and supplied to the couple of rotary recording video heads 7 through a recording amplifier 6.

On the other hand, the chrominance signal is separated from the composite baseband video signal and limited its frequency band by the band-pass filter 8 and down-converted to a frequency band lower than the frequency band of the frequency modulated luminance signal by the down-converter 9 so that its carrier frequency equal 40 times the horizontal scanning frequency. The down-convetered chrominance signal is again limited its frequency band by the low-pass filter 10 and supplied to the couple of rotary recording video heads 7 together with the above frequency modulated luminance signal through the recording amplifier 6.

Meanwhile, the horizontal synchronizing signal and vertical synchronizing signal are separated from the composite baseband video signal by the synchronizing signal separator 11. The PLL (Phase Locked Loop) circuit 12 derives a first oscillating signal of 40 times the horizontal scanning frequency and synchronized with the horizontal synchronizing signal. The first oscillating signal is supplied to the phase shifter 13, which is controlled by the horizontal synchronizing signal and the vertical synchronizing signal in such manner that the oscillating signal from the PLL circuit 12 is subjected to phase shift so as to be phase-retarded by 90 degree at every horizontal synchronizing interval only in odd (even) fields or fields A and to remain at 0 degree in its phase in even (odd) fields or fields B. Such phase shifted first oscillating signal is supplied to the frequency converter 14 where the second oscillating signal from the local oscillator 15 is supplied. The third oscillating signal from the frequency converter 14 is supplied to the down-converter 9. Accordingly, the down-converted chrominance signal shall be phase-retarded by 90 degree at every horizontal synchronizing interval only in odd (even) fields or fields A and remain at 0 degree in its phase in even (odd) fields or fields B as shown in Fig. 2. The couple of the rotary recording video heads 7 which have a relative azimuth angle of 12 degree to each other, for instance, are rotated in accordance with the drum servo circuit 16 synchronizing with the vertical synchronizing signal so that signal of fields A and B is alternately recorded in the sequential slant tracks A and B adjacent to each other without guardbands as shown in Fig. 2.

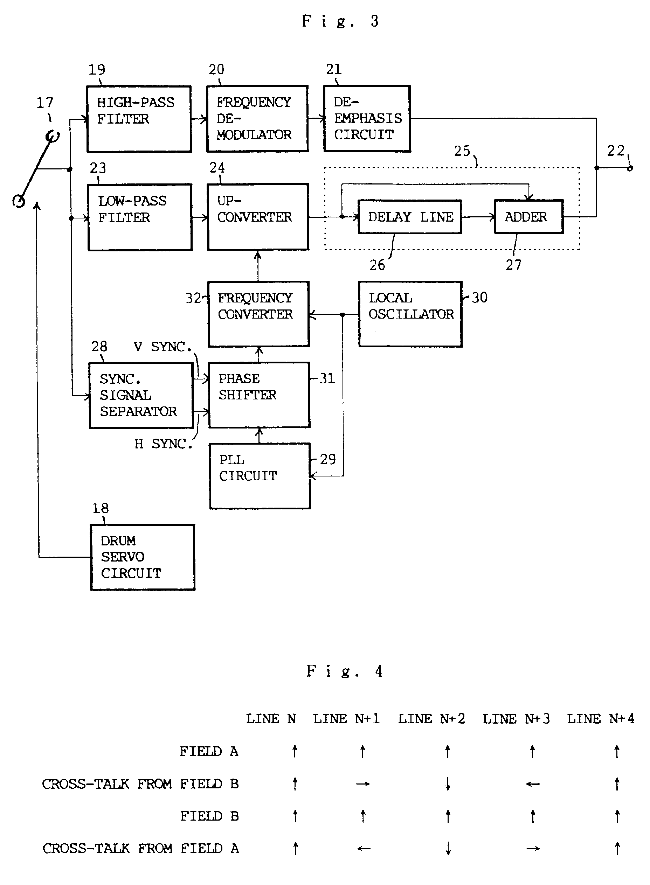

In the reproducing side of the currect VCR as shown in Fig. 3, the couple of the rotary reproducing video heads 17 which have same azimuth angle as the couple of rotary recording video heads 7 are rotated in accordance with the drum servo circuit 18 so that the recorded video signal of fields A and B is reproduced from the sequential slant tracks A and B alternately. The frequency modulated luminance signal is separated from the reproduced video signal by the high-pass filter 19 and supplied to the frequency demodulator 20. The demodulated luminance signal is subjected to de-emphasis by the de-emphasis circuit 21 and derived to the output terminal 22.

On the other hand, the down-converted chrominance signal is separated from the reproduced video signal by the low-pass filter 23 and up-converted to the frequency band higher than the frequency band of the demodulated luminance signal by the up-converter 24. The up-converted chrominance signal is supplied to the line comb filter 25 which consists of the delay line 26 having a delay time of 2 horizontal period and the adder 27. The output from the line comb filter 25 is derived to the output terminal 22 together with the luminance signal as a composite baseband video signal.

Meanwhile, the horizontal synchronizing signal and vertical synchronizing signal are separated from the reproduced video signal by the synchronizing signal separator 28. The PLL circuit 29 derives a fourth oscillating signal of 40 times the horizontal scanning frequency in accordance with a fifth oscillating signal from the local oscillator 30. The fourth oscillating signal is supplied to the phase shifter 31, which is controlled by the horizontal synchronizing signal and the vertical synchronizing signal in such manner that the fourth oscillating signal from the PLL circuit 29 is subjected to phase shift so as to be phase-advanced by 90 degree at every horizontal synchronizing interval only in fields A and to remain at 0 degree in its phase in fields B. Such phase shifted fourth oscillating signal is supplied to the frequency converter 32 where the fifth oscillating signal from the local oscillator 30 is supplied. The sixth oscillating signal from the frequency converter 32 is supplied to the up-converter 24. Accordingly, the up-converted chrominance signal recovers the same constant phase as the chrominance signal before down-converted in the recording side.

Due to the azimuth angle of the couple of rotary reproducing heads 17, the cross-talk component of the luminance signal from the adjacent track is sufficiently reduced. Because such azimuth angle is, however, only effective to signal of high frequency band, there is a cross-talk of the chromlnance signal from the preceding and succeeding adjacent tracks. Such cross-talk component of the chrominance signal is effectively cancelled by means of the line comb filter 25.

While the presently desired chrominance signal are obtained in same phase from the up-converter 24 every field, the cross-talk component of the chrominance signal reproduced from the adjacent tracks shall be phase-advanced by 90 degree at every horizontal synchronizing interval in fields B during reproducing fields A and remain as phase-retarded by 90 degree at every horizontal synchronizing interval in fields A during reproducing fields B as shown in Fig. 4.

Since the chrominance signal delayed by the delay line 26 and the undelayed chrominance signal are distant by two horizontal periods, the delayed and undelayed chrominance signals from the desired field are obtained in same phase and the delayed and undelayed chrominance signals from the adjacent fields as cross-talk component are obtained in reverse phase to each other. Accordingly, the chrominance signal derived from the adder 27 includes in principle only the chrominance signal reproduced from the desired field in a doubled amplitude and the cross-talk component from the adjacent tracks is cancelled. This cross-talk cancelling processing described above is performed, provided that there is line correlation between the two chrominance signals from two lines. Therefore, if there is no or less line correlation between two signals, the output signal from the line comb filter 25 is distorted.

Since the helper signal in the PAL PLUS-TV signal is modulated by color sub-carrier as described in the introductory part of the specification, the modulated helper signal is recorded by the current VCR as the down-cnverted chrominance signal. Therefore, the modulated helper signal is filtered by the low-pass filter 23 and supplied to the line comb filter 25 in the reproducing side. Because the helper signal, however, is generated by vertical filtering which performs a down-conversion of the luminance signal from 575 lines to 144 lines, the modulated helper signals undelayed and delayed by the delay line 26 have no or less line correlation. Therefore, if the modulated helper signal which is subjected to such cross-talk cancel processing by means of the line comb filter 25 is demodulated and utilized to improve the vertical resolution of the picture in the PAL PLUS-TV receiver, the total picture quality becomes deteriorated than the picture quality reproduced as the PAL-TV signal. Accordingly, it is necessary to detect that the helper signal has been subjected to such signal processing deteriorating the picture quality.

According to the invention, therefore, the PAL PLUS-TV signal is improved by adding such an additional signal as to make it possible to detect whether the input video signal supplied to a video equipment for the PAL PLUS-TV signal such as the PAL PLUS-TV receiver is subjected to signal processing improper to be handle as the PAL PLUS-TV signal.

As described above, the output of the line comb filter 25 has normally a double of the amplitude of the chrominance signal or the color burst supplied to the line comb filter 25 due to the addition in the adder 27, provided that the signal phase of two signals supplied to the adder 27 is identical. Therefore, if an additional signal having a certain frequency band is inserted in a certain location of a certain line of the PAL PLUS-TV signal and if no signal component having the similar frequency band is located in the same location of another line separated from the certain line by two lines, the output having a half of the usual amplitude is obtained from the line comb filter 25 at the timing of the reproduction in the certain location of the certain line or the another line. If such abnormal condition can be generated intentionally, it can be used for detection of the signal processing deteriorating the picture quality.

The chrominance signal is normally always included during the active 575 lines of each frame (from the second half of line 23 to line 310 and from line 336 to the first half of line 623 in respective fields) in the PAL-TV signal. Additionally, the color burst is constantly inserted in the back porch of the horizontal synchronizing signal except the vertical blanking period. Therefore, if such an additional signal has a frequency band near the frequency band of the chrominance signal or the color burst, other than the active lines of the PAL PLUS-TV signal is advisable as the location to be inserted the additional signal. It is, however, also possible in principle that any of the active 575 lines can be reserved for the additional signal according to circumstances.

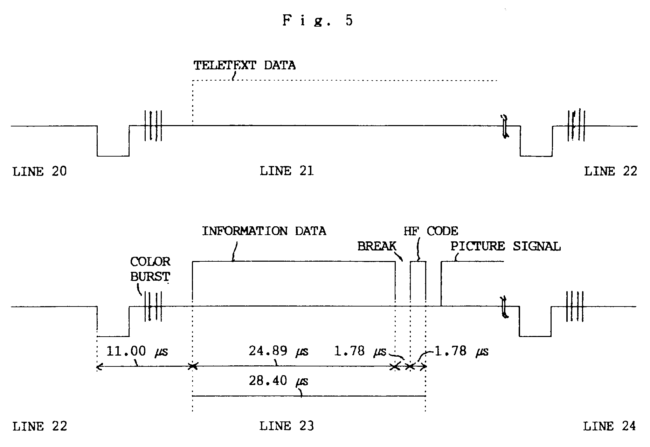

In the current proposal of the PAL PLUS system, the line 23 is allocated for the information data signal as described in the introductory part of the specification. It is proposed as an example of such information data that a preamble of 16 time slot as a run-in code and a start code having a pulse sequence of, for instance, "1101010111101001", an aspect ratio code of 3 bits occupying 6 time slot, a subtitle code of 1 bit occupying 2 time slot, a first reserved area occupying 8 time slot, a PAL PLUS code of 1 bit occupying 2 time slot, a film mode code of 1 bit occupying 2 time slot, a color plus code of 1 bit occupying 2 time slot, a helper code of 2 bit occupying 4 time slot, a second reserved area occupying 6 time slot, and a third reserved area occupying 8 time slot are transmitted in this sequense in the line 23 as shown in Fig. 5. These data are coded by bi-phase modulation (coding) except the preamble and the HF code. The each time slot is 444.4ns and therefore the data frequency is 1.125 MHz, which enables the current VCR to record and reproduce such information sufficiently. Accordingly, part of the information data such as, for instance, the aspect ratio of the pitcure transmitted can be utilized by the PAL-TV receiver of the wide aspect ratio.

In an embodiment of this invention, after and besides the above information data, the HF (high frequency) code as the additional signal is transmitted in the form of, for example, a pulse pattern of "01010101" during 4 time slot (444.4 (ns) X 4 = 1.78 (µs)) after a break area occupying 4 time slot. This pattern signal having the frequency 4.5 MHz is very close to the color burst of the frequency 4.43 MHz.

Meanwhile, although the line 21 may be occupied by teletext data, because the latter has a frequency band up to 3.47 MHz in the composite baseband video signal, its signal component is treated as the luminance signal in the VCR. Therefore, if the output signals regarding the lines 21 and 23 from the low-pass filter 23 are supplied to the line comb filter 25 through the up-converter 24, the output having the desired half amplitude is obtained from the line comb filter 25 at the time when the HF code is directly supplied to the adder 27 by-passing the delay line 26 regardless of the phase of the HF code.

According to the invention, however, the location where the HF code is inserted is not limited to the first half of the line 23 nor a specific position within a line as exemplified above. In contrast with the PAL standard where the picture signal will commence from the second half of the line 23, the helper signal commences from the line 24 in the PAL PLUS system. Accordingly, it is also realistic to use the second half of the line 23. Furthermore, the HF code can be modified to other coded data, bi-phase coded data for example, or signal having basically a frequeny band around 4.5 MHz, preferably within the range of 4 to 5 MHz. In this case, any other information data as the source code can be transmitted on the coded data.

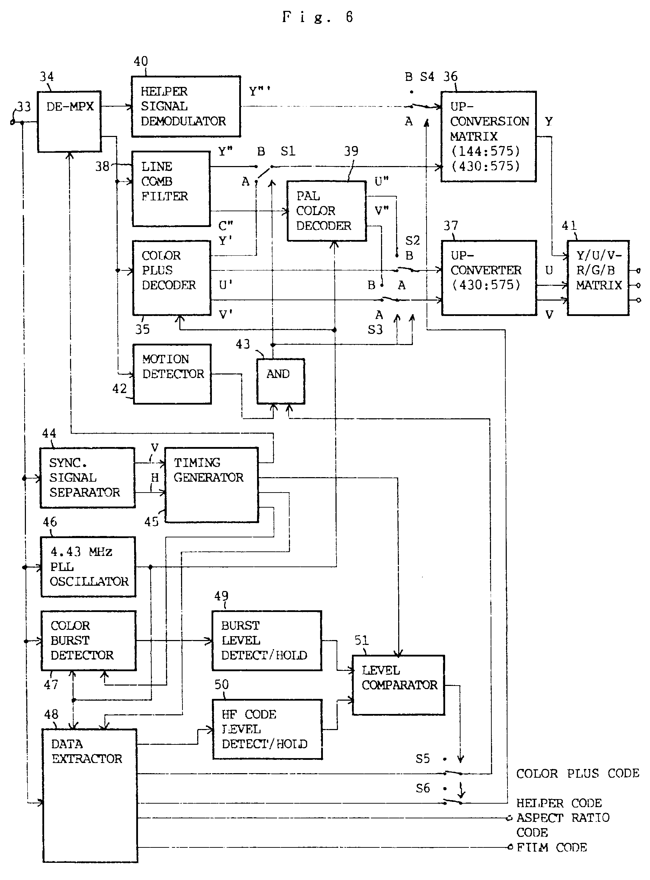

Now referring to Fig. 6, an embodiment of a PAL PLUS signal processing part in the video equipment according to the invention will be explained, though the only important part is described and the other detail part will be omitted to simplify the explanation. In the decoding part according to the proposed PAL PLUS system, the composite baseband video signal according to the PAL PLUS system is supplied to the demultiplexer 34 through the input terminal 33 so as to be separated into the signal of the middle 430 lines and the modulated helper signal in the upper 72 and lower 72 lines.

The signal of the middle 430 lines are supplied to the color plus decoder 35 where the luminace signal Y' and color difference signals U' and V' are obtained in the reverse manner of the encoder as descirbed in the article "Ein Verfahren zur verbesserten PAL-Codierung und -Decodierung" by R. Kays, FERNSEH- UND KINO-TECHNIK, 44 Jahrgang Nr. 11/1990, and further supplied to the up-conversion matrix 36 and the up-converter 37 through the switching circuits S1, S2 and S3, respectively. The signal of the middle 430 lines are also supplied to the line comb filter 38 so as to be separated into the luminace signal Y'' and the chrominance signal C'' which is further supplied to the PAL color decoder 39 where the color difference signals U'' and V'' are derived. The luminace signal Y'' from the line comb filter 38 and the color difference signals U'' and V'' from the PAL color decoder 39 are further supplied to the up-conversion matrix 36 and the up-converter 37 through the switching circuits S1, S2 and S3, respectively.

Meanwhile, the modulated helper signal in the upper 72 and lower 72 lines is demodulated in the helper signal demodulator 40 and the demodulated helper signal Y''' is further supplied to the up-coversion matrix 36 through the switching circuit S4. The demodulated helper signal Y''' of the upper 72 and lower 72 are combined with the luminance signal Y' or Y'' of the middle 430 lines in the up-conversion matrix 36 so as to be up-converted into the luminance signal Y of 575 lines with an improved vertical resolution, while the color difference signals U' or U'' and V' or V'' of the middle 430 lines are also up-converted into the color difference signals U and V of 575 lines. The up-converted luminance signal Y and color difference signals U and V can be further converted into the color component signals R, G and B in the Y/U/V-R/G/B matrix 41, if necessary.

The motion detector 42 is provided to receive the composite baseband video signal and detect the motion in the picture represented by the video signal. The detection signal is supplied through the AND circuit 43 to the switching circuits S1, S2 and S3, which are changed over from the contacts B to the contacts A, respectively, if no or little motion in the picture is detected, so that the luminance signal Y' and the color difference signals U' and V' from the color plus decoder 35 are supplied to the up-conversion matrix 36 and the up-converter 37, respectively, and which are changed over from the contacts A to the contacts B, respectively, if large motion in the picture is detected, so that the luminance signal Y'' from the line comb filter 38 and the color difference signals U'' and V'' from the PAL color decoder 39 are supplied to the up-conversion matrix 36 and the up-converter 37, respectively. In the above described PAL PLUS signal processing circuit, delay circuits for delay compensation should be inserted in the passes for example between the helper signal demodulator 40 and the up-conversion matrix 36, the line comb filter 38 and the up-conversion matrix 36, the PAL color decoder 39 and the up-converter 37, if necessary, though it is not illustrated.

Further to the above construction, the embodiment includes the synchronizing signal separator 44, the timing signal generator 45, the PLL (Phase Locked Loop) oscillator 46, the color burst detector 47, the data extractor 48, the burst level detect and hold circuit 49, the HF code level detect and hold circuit 50 and the level comparator 51.

The vertical and horizontal synchronizing signals are separeted in the synchronizing signal separator 44 from the composite baseband video signal supplied to the input terminal 33 so as to be supplied to the timing signal generator 45. The timing signals generated in the timing signal generator 45 are supplied to respectve circuits wherever needed.

The PLL (Phase Locked Loop) oscillator 46 generates the oscillating signal having the frequency of 4.43 MHz, which is supplied to the PAL color decoder 41 and the color plus decoder 35, which also includes a PAL color decoder, as well as the color burst detector 47 and the data extractor 48. The color burst signal which is transmitted at the back porch of every line as shown in Fig. 5 is tuned to the oscillating signal from the PLL oscillator 46 and extracted by the color burst detector 47 at the timing of the back porch according to a proper timing signal from the timing signal generator 45.

The data extractor 48 derives the HF code, color plus code, helper code, aspect ratio code, film mode code and so on at the respective timing as described above according to respective proper timing signals from the timing signal generator 45. The HF code may be detected in the data extractor 48 to be tuned to the oscillating signal from the PLL oscillator 46. The color plus code is supplied through the switching circuit S5 to the AND circuit 43, so that if the color plus code indicating that the television signal subjected to the color plus encoding is transmitted, the above descibed color plus decoding is performed according to the detection signal from the motion detector 42. The helper signal bit is supplied through the switching circuit S6 to the switching circuit S4 so that the helper signal becomes available, if the helper code indicating that the helper signal is transmitted.

The color burst signal and the HF code signal are supplied to the burst level detect and hold circuit 49 and the HF code level detect and hold circuit 50, respectively, in which its signal levels are detected and maintained, respectively. The level signals from the burst level detect and hold circuit 49 and the HF code level detect and hold circuit 50 are supplied to the level comparator 51, respectively, so as to be compared with each other its levels at a proper timing according to a timing signal from the timing signal generator 45. When the level signals from the burst level detect and hold circuit 49 and the HF code level detect and hold circuit 50 are compared, each levels are normalized, because the color burst signal and the HF code may be transmitted in different levels, respectively.

As descrived above, if the PAL PLUS-TV signal provided to the input terminal 33 has been subjected, for example, to the line comb filtering in the VCR, the normalized level of the HF code signal is about half of or less than the normalized level of the color burst signal, whereby the level comparator 51 provides the switching circuits S5 and S6 with the switch-OFF signals.

If the switching circuit S5 becomes open and the color plus code is not transmitted to the AND circuit 43, the detection signal from the motion detector 42 becomes invalid so that the switching circuits S1, S2 and S3 are changed over from the contacts A to the contacts B to always supply the up-conversion matrix 36 and the up-converter 37 with the luminance signal Y'' from the line comb filter 38 and the color difference signals U'' and V'' from the PAL color decoder 39, respectively, regardless of the detection signal of the motion detector 42. Therefore, the PAL PLUS-TV signal, which time base has been unstable due to the reproduction by the VCR, can be prevented from being subjected to the color plus decoding which deteriorates the reproduced picture quality otherwise.

Meanwhile, if the switching circuit S6 becomes open and the helper code is not transmitted to the switching circuit S4, the latter is changed over from the contact A to the contact B so that the demodulated helper signal Y''' from the helper signal demodulator 40 is not supplied to the up-conversion matrix 36. Therefore, it can be also avoided that the helper signal which has been distorted by the line comb filter 25 in the VCR and limited its frequency band in the recording by the VCR is utilized to reproduce the picture which quality otherwise becomes also worse.

On the Contrary, if the chrominance signal is not subjected to the cross-talk cancel processing by means of the line comb filter 25, for instance, the normalized level of the HF code is similar to the normalized level of the color burst signal so that the switching circuits S5 and S6 are closed. Therefore, the helper signal Y''' and the luminance signal Y' and the color difference signals U' and V' are supplied to the up-conversion matrix 36 and the up-converter 37, if these signals are available.

In the above embodiment as shown in Fig. 5, it is possible, in addition to the HF code inserted in the line 23, to insert another additional signal and preferably having the reverse phase to the HF code in the corresonding location in the line 21, whereby the output level from the HF code level detect and hold circuit 50 becomes zero in principle, so that it makes the above comparison easier or it is even sufficient to check only the output level from the HF code level detect and hold circuit 50 without comparing with the burst signal level.

Instead of the color burst signal, it is also possible to compare the signal level of the HF code with a reference level signal from a reference signal generator provided within the video equipment, though not illustrated.

As another variation, the signal level of the HF code may be compared with the signal level of the information data extracted by the data extractor 48. The information data has for example a frequency of 1.125 MHz so as not to be subjected to the signal processing for the chrominance signal in the current VCR. Therefore, the signal level of the HF code becomes half of or less than the signal level of the information data.

Although the problem caused by the line comb filtering in the current VCR is paid attention to in the above description, the television signal may be transmitted through a bad transmission medium not limited to the current VCR, by which signal component of a specific frequency band may be damaged. This condition also may be detected by the level comparison of the HF code having a high frequency with the information data having a low frequency.

Whether or not the PAL PLUS-TV signal is affected by the signal processing or the signal transmission to deteriorate the picture quality can be also detected by checking whether the HF code is readable as such the code data as described above by comparing with the reference code.

Therefore, it is understood that the invention can be applied to solve similar problems caused by a line comb filter provided in other video equipment, other circuit or transmission line causing signal deterioration.

Although if the video equipment of the above described embodiment is a PAL PLUS-TV receiver in which the PAL PLUS-TV signal is reproduced as the PAL-TV signal, the picture can be displayed on the wide screen by using the up-conversion matrix 36 and the up-converter 37 for expansion of the picture in the vertical direction, it is also possible to use a vertical deflection system having an expanded amplitude instead of the line up-conversion by the up-converter matrix 36 and the up-converter 37.

On the other hand, the picture can be displayed as the letter-box size of the aspect ratio 4:3 by compressing the picture in the line direction and without demultiplexing the modulated helper signal in the PAL PLUS-TV receiver having a wide screen.

Furthermore, the invention can be also applied to the conventional television signal according to the conventional standard such as PAL-TV standard, in which the transmission signal is further subjected to the color plus encoding, and a television receiver for such conventional television standard.

Moreover, even in case that a television signal according to a conventional television standard such as PAL-TV standard is not subjected to the color plus encoding, if the television signal reproduced from the current VCR is supplied to a television receiver for such the conventional television standard, in which the television signal is treated in such a special manner as to improve the picture quality, the picture quality may be deteriorated. According to the invention, this kind of situation is also detected and the television signal can be prevented from being treated in the special manner, if the television signal supplied from the current VCR.

The present embidiments are, therefore, to be considered in all respects as illustrative and not restrictive, the scope of the invention being indicated by the claims rather than by the foregoing description, and all changes which come within the meaning and range of the equivalents of the claims are therefore intended to be embraced therein.

## Claims

1. A television signal comprising:
- a vertical synchronizing signal in each vertical period and a horizontal synchronizing signal in each horizontal period,
- a luminance signal component inserted substantially during each horizontal period in the active lines,
- a chrominance signal component modulated by a carrier signal and frequency multiplexed with the luminance signal component substantially during each horizontal period In the active lines and
- a color burst signal in a back porch of every horizontal synchronizing signal except the vertical blanking period, and
- an additional control signal inserted in a certain horizontal period, the additional signal being utilized in first video signal processing means for performing first signal processing, in order to detect whether the television signal supplied to the first video signal processing means has been subjected to second signal processing in a signal transmission stage preceding to the first signal processing means, so as to suspend the first signal processing whereby signal deterioration may be caused to result in the picture quality deterioration otherwise due to the second signal processing,
wherein the additional control signal is an alternating analog signal having a frequency band equal or close to the color burst signal and being located in a certain line and a further additional signal having the reverse phase to the additional control signal or no signal having a frequency band equal to or close to the additional control signal is located in a place corresponding to where the additional control signal is located in a line being separated from the certain line by a certain distance.

2. A television signal comprising:
- a vertical synchronizing signal in each vertical period and
- a horizontal synchronizing signal in each horizontal period,
- a luminance signal component inserted substantially during each horizontal period in the active lines,
- a chrominance signal component modulated by a carrier signal and frequency multiplexed with the luminance signal component substantially during each horizontal period in the active lines and a color burst signal in a back porch of every horizontal synchronizing signal except the vertical blanking period, and
- an additional control signal inserted in a certain horizontal period, the additional signal being utilized in first video signal processing means for performing first signal processing, in order to detect whether the television signal supplied to the first video signal processing means has been subjected to second signal processing in a signal transmission stage preceding to the first signal processing means, so as to suspend the first signal processing whereby signal deterioration may be caused to result in the picture quality deterioration otherwise due to the second signal processing,
wherein the additional control signal is a digital code signal having a frequency band equal or close to the color burst signal and being located in a certain line and a further additional signal having the reverse phase to the additional control signal or no signal having a frequency band equal to or close to the additional control signal is located in a place corresponding to where the additional control signal is located in a line being separated from the certain line by a certain distance.

3. A television signal according to any preceding claim, further comprising an additional signal component including information improving the vertical resolution of the picture represented by the luminance signal component, wherein the first signal processing combines the additional signal component with the luminance signal component.

4. A television signal according to claim 3, wherein the additional signal component is modulated by the carrier signal.

5. A television signal according to claim 1 or 2, wherein the luminance signal component and the chrominance signal component are subjected to a third signal processing corresponding to the first signal processing.

6. A television signal according to claim 5, wherein the third signal processing is a color plus encoding and the first signal processing is a color plus decoding corresponding to the color plus encoding.

7. A television signal according to any preceding claim, wherein the second signal processing at the signal transmission stage is line comb filtering.

8. A television signal according to any preceding claim, wherein the signal transmission stage includes a video tape player having a line comb filter.

9. A method for transmitting a television signal comprising the steps of:
- generating a vertical synchronizing signal in each vertical period and a horizontal synchronizing signal in each horizontal period;
- generating a luminance signal component from a picture signal, and
- inserting the luminance signal component substantially during each horizontal period in the active lines:
- generating a chrominance signal component from the picture signal,
- modulating the chrominance signal component by a carrier signal, and
- frequency multiplexing the modulated chrominance signal component with the luminance signal component substantially during each horizontal period in the active lines; and
- generating a color burst signal and inserting the color burst signal in a back porch of every horizontal synchronizing signal except the vertical blanking period, and
- generating an additional control signal to be utilized in first video signal processing means for performing first signal processing, in order to detect whether the television signal supplied to the first video signal processing means has been subjected to a second signal processing at a signal transmission stage preceding to the first signal processing means, so as to suspend the first signal processing whereby signal deterioration may be caused to result in picture quality deterioration otherwise due to the second signal processing, wherein the additional control signal is an alternating analog signal, further comprising the step of inserting the additional control signal having a frequency band equal or close to the color burst signal in a certain line and a further additional signal having the reverse phase to the additional control signal or no signal having the frequency band equal or close to the additional control signal in a place corresponding to where the additional control signal is located in a line being separated from the certain line by a certain distance.

10. A method for transmitting a television signal comprising the steps of:
- generating a vertical synchronizing signal in each vertical period and a horizontal synchronizing signal in each horizontal period;
- generating a luminance signal component from the picture signal, and
- inserting the luminance signal component substantially during each horizontal period in the active lines:
- generating a chrominance signal component from the picture signal,
- modulating the chrominance signal component by a carrier signal, and
- frequency multiplexing the modulated chrominance signal component with the luminance signal component substantially during each horizontal period in the active lines; and
- generating a color burst signal and inserting the color burst signal in a back porch of every horizontal synchronizing signal except the vertical blanking period, and
- generating an additional control signal to be utilized in first video signal processing means for performing first signal processing, in order to detect whether the television signal supplied to the first video signal processing means has been subjected to a second signal processing at a signal transmission stage preceding to the first signal processing means, so as to suspend the first signal processing whereby signal deterioration may be caused to result in picture quality deterioration otherwise due to the second signal processing, wherein the additional control signal is a digital code signal, further comprising the step of inserting the additional control signal having a frequency band equal or close to the color burst signal in a certain line and a further additional signal having the reverse phase to the additional control signal or no signal having the frequency band equal or close to the additional control signal in a place corresponding to where the additional control signal is located in a line being separated from the certain line by a certain distance.

11. A method according to claim 9 or 10, further comprising the step of generating an additional signal component including information improving the vertical resolution of the picture represented by the luminance signal component, wherein the first signal processing combines the additional signal component with the luminance signal component.

12. A method according to claim 11, further comprising the step of modulating the additional signal component by the carrier signal.

13. A method according to claim 9 or 10, further comprising the step of subjecting the luminance signal component and the chrominance signal component to a third signal processing corresponding to the first signal processing.

14. A method according to claim 13, wherein the third signal processing is a color plus encoding and the first signal processing is a color plus decoding corresponding to the color plus encoding.

15. A method according to claim 11, 12, 13, or 14, wherein the second signal processing at the signal transmission stage is line comb filtering.

16. A method according to claim 11, 12, 13, 14 or 15, wherein the signal transmission stage includes a video tape player having a line comb filter.

17. A video signal processing equipment comprising:
a) signal input means for receiving a composite video signal including a vertical synchronizing signal in each vertical period and a horizontal synchronizing signal in each horizontal period, a luminance signal component inserted substantially during each horizontal period in the active lines, a chrominance signal component modulated by a carrier signal and frequency multiplexed with the luminance signal component substantially during each horizontal period in the active lines and a color burst signal in a back porch of every horizontal synchronizing signal except the vertical blanking period;
b) first signal processing means supplied with the composite video signal and for performing first signal processing to derive the luminance signal component and the chrominance signal component; and
c) second signal processing means supplied with a signal related to the composite video signal and for performing second signal processing to improve the picture quality represented by the television signal;
**characterized by:**
d) signal separating means for extracting an additional control signal included in the composite video signal;
e) detecting means for detecting a condition of the additional control signal indicating whether the composite video signal supplied to the signal input means has been subjected to third signal processing at a signal transmission stage before supplied;
f) control means for disabling the second signal processing means in which signal deterioration may be caused to result in the picture quality deterioration otherwise due to the third signal processing, wherein the additional control signal is an alternating analog signal and said detecting means detects the signal level of the additional control signal, further comprising color burst signal detecting means for extracting the color burst signal, wherein the additional control signal has a frequency band equal or close to the color burst signal in a certain line and a further additional signal having the reverse phase to the additional control signal or no signal having the frequency band equal or close to the additional control signal is located in a place corresponding to where the additional control signal is located in a line being separated from the certain line by a certain distance, and said detecting means compares the signal level of additional control signal with the signal level of the color burst signal as the reference level.

18. A video signal processing equipment comprising:
a) signal input means for receiving a composite video signal including a vertical synchronizing signal in each vertical period and a horizontal synchronizing signal in each horizontal period, a luminance signal component inserted substantially during each horizontal period in the active lines, a chrominance signal component modulated by a carrier signal and frequency multiplexed with the luminance signal component substantially during each horizontal period in the active lines and a color burst signal in a back porch of every horizontal synchronizing signal except the vertical blanking period;
b) first signal processing means supplied with the composite video signal and for performing first signal processing to derive the luminance signal component and the chrominance signal component; and
c) second signal processing means supplied with a signal related to the composite video signal and for performing second signal processing to improve the picture quality represented by the television signal;
**characterized by:**
d) signal separating means for extracting an additional control signal included in the composite video signal;
e) detecting means for detecting a condition of the additional control signal indicating whether the composite video signal supplied to the signal input means has been subjected to third signal processing at a signal transmission stage before supplied;
f) control means for disabling the second signal processing means in which signal deterioration may be caused to result in the picture quality deterioration otherwise due to the third signal processing, wherein the additional control signal is a digital code signal having a frequency band equal or close to the color burst signal and being located in a certain line and a further additional signal having the reverse phase to the additional control signal or no signal having a frequency band equal to or close to the additional control signal is located in a place corresponding to where the additional control signal is located in a line being separated from the certain line by a certain distance and said detecting means compares the additional control signal with a reference code signal.

19. A video signal processing equipment according to claim 17 or 18, wherein the third signal processing at the signal transmission stage is line comb filtering.

20. A video signal processing equipment according to claim 19, wherein the signal transmission stage includes a video tape player having a line comb filter.

21. A video signal processing equipment according to claim 17, 18, 19 or 20, wherein the composite video signal further includes an additional signal component including information improving the vertical resolution of the picture represented by the luminance signal component, and said second signal processing means is supplied with the additional signal componentand combines the additional signal component with the luminance signal component.

22. A video signal processing equipment according to claim 21, wherein the additional signal component is modulated by the carrier signal.

23. A video signal processing equipment according to claim 17, 18, 19 or 20, wherein said second signal processing means is supplied with the luminance signal component and the chrominance signal component which has been subjected to a first three-dimensional signal processing and performs a second three-dimensional signal processing in the reverse manner to the first three-dimensional signal processing.

24. A video signal processing equipment according to claim 23, wherein the first and second three-dimensional signal processing are color plus encoding and decoding, respectively.

## Patentansprüche

1. Fernsehsignal, mit:
- einem Vertikalsynchronsignal in jeder vertikalen Periode und einem Horizontalsynchronsignal in jeder horizontalen Periode,
- einem im Wesentlichen während jeder horizontalen Periode in die aktiven Zeilen eingefügten Luminanzsignalanteil,
- einem mit einem Trägersignal modulierten und im Wesentlichen während jeder horizontalen Periode in den aktiven Zeilen mit dem Luminanzsignalanteil frequenzgemultiplexten Chrominanzsignalanteil, und
- einem Farbburstsignal in einer hinteren Schwarzschulter jedes Horizontalsynchronsignals mit Ausnahme der vertikalen Austastlücke, und
- einem in einer bestimmten horizontalen Periode eingefügten zusätzlichen Steuersignal, welches in einem ersten Videosignalverarbeitungsmittel zur Durchführung einer ersten Signalverarbeitung verwendet wird, um festzustellen, ob das an das erste Videosignalverarbeitungsmittel angelegte Fernsehsignal in einer dem ersten Signalverarbeitungsmittel vorgeschalteten Signalübertragungsstufe einer zweiten Signalverarbeitung unterworfen wurde, damit die erste Signalverarbeitung abgestellt werden kann, wobei sonst aufgrund der zweiten Signalverarbeitung eine Signalverschlechterung verursacht werden kann, die zu einer Bildverschlechterung führt,
wobei das zusätzliche Steuersignal ein analoges Wechselsignal mit einem Frequenzband gleich oder nahe dem des Farbburstsignals ist und in einer bestimmten Zeile angeordnet ist, und ein weiteres zusätzliches Signal mit der inversen Phase zu dem zusätzlichen Steuersignal oder kein Signal mit einem Frequenzband gleich oder nahe dem des zusätzlichen Steuersignals in einer Zeile, die zu der bestimmten Zeile einen bestimmten Abstand aufweist, an einer Stelle angeordnet ist, die der Position des zusätzlichen Steuersignals entspricht.

2. Farbsignal, mit:
- einem Vertikalsynchronsignal in jeder vertikalen Periode und
- einem Horizontalsynchronsignal in jeder horizontalen Periode,
- einem im Wesentlichen während jeder horizontalen Periode in die aktiven Zeilen eingefügten Luminanzsignalanteil,
- einem mit einem Trägersignal modulierten und im Wesentlichen während jeder horizontalen Periode in den aktiven Zeilen mit dem Luminanzsignalanteil frequenzgemultiplexten Chrominanzsignalanteil, und einem Farbburstsignal in einer hinteren Schwarzschulter jedes Horizontalsynchronsignals mit Ausnahme der vertikalen Austastlücke, und
- einem in einer bestimmten horizontalen Periode eingefügten zusätzlichen Steuersignal, welches in einem ersten Videosignalverarbeitungsmittel zur Durchführung einer ersten Signalverarbeitung verwendet wird, um festzustellen, ob das an das erste Videosignalverarbeitungsmittel angelegte Fernsehsignal in einer dem ersten Signalverarbeitungsmittel vorgeschalteten Signalübertragungsstufe einer zweiten Signalverarbeitung unterworfen wurde, damit die erste Signalverarbeitung abgestellt werden kann, wobei sonst aufgrund der zweiten Signalverarbeitung eine Signalverschlechterung verursacht werden kann, die zu einer Bildverschlechterung führt,
wobei das zusätzliche Steuersignal ein digitales Codesignal mit einem Frequenzband gleich oder nahe dem des Farbburstsignals ist und in einer bestimmten Zeile angeordnet ist, und ein weiteres zusätzliches Signal mit der inversen Phase zu dem zusätzlichen Steuersignal oder kein Signal mit einem Frequenzband gleich oder nahe dem des zusätzlichen Steuersignals in einer Zeile, die zu der bestimmten Zeile einen bestimmten Abstand aufweist, an einer Stelle angeordnet ist, die der Position des zusätzlichen Steuersignals entspricht.

3. Fernsehsignal nach einem der vorstehenden Ansprüche, weiter mit einem zusätzlichen Signalanteil, der Information zur Verbesserung der vertikalen Auflösung des durch den Luminanzsignalanteil dargestellten Bildes enthält, wobei die erste Signalverarbeitung den zusätzlichen Signalanteil mit dem Luminanzsignalanteil kombiniert.

4. Fernsehsignal nach Anspruch 3, bei dem der zusätzliche Signalanteil mit dem Trägersignal moduliert ist.

5. Fernsehsignal nach Anspruch 1 oder 2, bei dem der Luminanzsignalanteil und der Chrominanzsignalanteil einer dritten Signalverarbeitung unterworfen werden, die zu der ersten Signalverarbeitung korrespondiert.

6. Fernsehsignal nach Anspruch 5, bei dem die dritte Signalverarbeitung eine Color Plus Codierung und die erste Signalverarbeitung eine Color Plus Decodierung ist, die zu der Color Plus Codierung korrespondiert.

7. Fernsehsignal nach einem der vorstehenden Ansprüche, bei dem die zweite Signalverarbeitung in der Signalübertragungsstufe eine Zeilenkammfilterung ist.

8. Fernsehsignal nach einem der vorstehenden Ansprüche, bei dem die Signalübertragungsstufe ein Videoband-Wiedergabegerät mit einem Zeilenkammfilter umfasst.

9. Verfahren ein Fernsehsignal zu übertragen, mit den folgenden Schritten:
- erzeugen eines Vertikalsynchronsignals in jeder vertikalen Periode und eines Horizontalsynchronsignals in jeder horizontalen Periode,
- erzeugen eines Luminanzsignalanteils aus einem Bildsignal, und
- einfügen des Luminanzsignalanteils im Wesentlichen während jeder horizontalen Periode in die aktiven Zeilen,
- erzeugen eines Chrominanzsignalanteils aus dem Bildsignal,
- modulieren des Chrominanzsignalanteils mit einem Trägersignal, und
- frequenzmultiplexen des modulierten Chrominanzsignalanteils mit dem Luminanzsignalanteil im Wesentlichen während jeder horizontalen Periode in den aktiven Zeilen, und
- erzeugen eines Farbburstsignals und einfügen des Farbburstsignals in eine hintere Schwarzschulter jedes Horizontalsynchronsignals mit Ausnahme der vertikalen Austastlücke, und
- erzeugen eines zusätzlichen Steuersignals, welches in einem ersten Videosignalverarbeitungsmittel zur Durchführung einer ersten Signalverarbeitung verwendbar ist, um festzustellen, ob das an das erste Videosignalverarbeitungsmittel angelegte Fernsehsignal in einer dem ersten Signalverarbeitungsmittel vorgeschalteten Signalübertragungsstufe einer zweiten Signalverarbeitung unterworfen wurde, damit die erste Signalverarbeitung abgestellt werden kann, wobei sonst aufgrund der zweiten Signalverarbeitung eine Signalverschlechterung verursacht werden kann, die zu einer Bildverschlechterung führt, wobei das zusätzliche Steuersignal ein analoges Wechselsignal ist, weiter mit dem Schritt des Einfügens des zusätzlichen Steuersignals mit einem Frequenzband gleich oder nahe dem des Farbburstsignals in eine bestimmte Zeile und ein weiteres zusätzliches Signal mit der inversen Phase zu dem zusätzlichen Steuersignal oder kein Signal mit einem Frequenzband gleich oder nahe dem des zusätzlichen Steuersignals in eine Zeile, die zu der bestimmten Zeile einen bestimmten Abstand aufweist, an eine Stelle, die der Position des zusätzlichen Steuersignals entspricht.

10. Verfahren ein Fernsehsignal zu übertragen, mit den folgenden Schritten:
- erzeugen eines Vertikalsynchronsignals in jeder vertikalen Periode und eines Horizontalsynchronsignals in jeder horizontalen Periode,
- erzeugen eines Luminanzsignalanteils aus dem Bildsignal, und
- einfügen des Luminanzsignalanteils im Wesentlichen während jeder horizontalen Periode in die aktiven Zeilen,
- erzeugen eines Chrominanzsignalanteils aus dem Bildsignal,
- modulieren des Chrominanzsignalanteils mit einem Trägersignal, und
- frequenzmultiplexen des modulierten Chrominanzsignalanteils mit dem Luminanzsignalanteil im Wesentlichen während jeder horizontalen Periode in den aktiven Zeilen, und
- erzeugen eines Farbburstsignals und einfügen des Farbburstsignals in eine hintere Schwarzschulter jedes Horizontalsynchronsignals mit Ausnahme der vertikalen Austastlücke, und
- erzeugen eines zusätzlichen Steuersignals, welches in einem ersten Videosignalverarbeitungsmittel zur Durchführung einer ersten Signalverarbeitung verwendbar ist, um festzustellen, ob das an das erste Videosignalverarbeitungsmittel angelegte Fernsehsignal in einer dem ersten Signalverarbeitungsmittel vorgeschalteten Signalübertragungsstufe einer zweiten Signalverarbeitung unterworfen wurde, damit die erste Signalverarbeitung abgestellt werden kann, wobei sonst aufgrund der zweiten Signalverarbeitung eine Signalverschlechterung verursacht werden kann, die zu einer Bildverschlechterung führt, wobei das zusätzliche Steuersignal ein digitales Codesignal ist, weiter mit dem Schritt des Einfügens des zusätzlichen Steuersignals mit einem Frequenzband gleich oder nahe dem des Farbburstsignals in eine bestimmte Zeile und ein weiteres zusätzliches Signal mit der inversen Phase zu dem zusätzlichen Steuersignal oder kein Signal mit einem Frequenzband gleich oder nahe dem des zusätzlichen Steuersignals in eine Zeile, die zu der bestimmten Zeile einen bestimmten Abstand aufweist, an eine Stelle, die der Position des zusätzlichen Steuersignals entspricht.

11. Verfahren nach Anspruch 9 oder 10, weiter dem Schritt der Erzeugung eines zusätzlichen Signalanteils, der Information zur Verbesserung der vertikalen Auflösung des durch den Luminanzsignalanteil dargestellten Bildes enthält, wobei die erste Signalverarbeitung den zusätzlichen Signalanteil mit dem Luminanzsignalanteil kombiniert.

12. Verfahren nach Anspruch 11, weiter dem Schritt der Modulation des zusätzlichen Signalanteils mit dem Trägersignal.

13. Verfahren nach Anspruch 9 oder 10, weiter dem Schritt der Verarbeitung des Luminanzsignalanteils und des Chrominanzsignalanteils in einer dritten Signalverarbeitung, die zu der ersten Signalverarbeitung korrespondiert.

14. Verfahren nach Anspruch 13, bei dem die dritte Signalverarbeitung eine Color Plus Codierung und die erste Signalverarbeitung eine Color Plus Decodierung ist, die zu der Color Plus Codierung korrespondiert.

15. Verfahren nach Anspruch 11, 12, 13 oder 14, bei dem die zweite Signalverarbeitung in der Signalübertragungsstufe eine Zeilenkammfilterung ist.

16. Verfahren nach Anspruch 11, 12, 13, 14 oder 15, bei dem die Signalübertragungsstufe ein Videoband-Wiedergabegerät mit einem Zeilenkammfilter umfasst.

17. Videosignalverarbeitungseinrichtung, mit:
a) einem Signaleingabemittel zum Empfang eines zusammengesetzten Videosignals mit einem Vertikalsynchronsignal in jeder vertikalen Periode und einem Horizontalsynchronsignal in jeder horizontalen Periode, einem im Wesentlichen während jeder horizontalen Periode in die aktiven Zeilen eingefügten Luminanzsignalanteil, einem mit einem Trägersignal modulierten und im Wesentlichen während jeder horizontalen Periode in den aktiven Zeilen mit dem Luminanzsignalanteil frequenzgemultiplexten Chrominanzsignalanteil und einem Farbburstsignal in einer hinteren Schwarzschulter jedes Horizontalsynchronsignals mit Ausnahme der vertikalen Austastlücke;
b) einem mit dem zusammengesetzten Videosignal versorgten ersten Signalverarbeitungsmittel zur Durchführung einer ersten Signalverarbeitung zum Ableiten des Luminanzsignalanteils und des Chrominanzsignalanteils; und
c) einem mit einem in Bezug zu dem zusammengesetzten Videosignal stehenden Signal versorgten zweiten Signalverarbeitungsmittel zur Durchführung einer zweiten Signalverarbeitung zur Verbesserung der durch das Fernsehsignal dargestellten Bildqualität;
**gekennzeichnet durch**
d) ein Signaltrennungsmittel zur Extrahierung eines in dem zusammengesetzten Videosignal enthaltenen zusätzlichen Steuersignals;
e) ein Detektormittel zur Feststellung eines Zustands des zusätzlichen Steuersignals, der anzeigt, ob das an das Signaleingabemittel angelegte zusammengesetzte Videosignal vor der Zuführung in einer Signalübertragungsstufe einer dritten Signalverarbeitung unterworfen wurde;
f) einem Steuermittel zum Abstellen des zweiten Signalverarbeitungsmittels, in dem sonst aufgrund der dritten Signalverarbeitung eine Signalverschlechterung verursacht werden kann, die zu einer Bildverschlechterung führt, wobei das zusätzliche Steuersignal ein analoges Wechselsignal ist und das Detektormittel den Signalpegel des zusätzlichen Steuersignals detektiert, weiter mit einem Farbburstsignaldetektormittel zur Extrahierung des Farbburstsignals, wobei das zusätzliche Steuersignal in einer bestimmten Zeile ein Frequenzband gleich oder nahe dem des Farbburstsignals aufweist, und ein weiteres zusätzliches Signal mit der inversen Phase zu dem zusätzlichen Steuersignal oder kein Signal mit einem Frequenzband gleich oder nahe dem des zusätzlichen Steuersignals in einer Zeile, die zu der bestimmten Zeile einen bestimmten Abstand aufweist, an einer Stelle angeordnet ist, die der Position des zusätzlichen Steuersignals entspricht, und das Detektormittel den Signalpegel des zusätzlichen Steuersignals mit dem Signalpegel des Farbburstsignals als Referenzpegel vergleicht.

18. Videosignalverarbeitungseinrichtung, mit:
a) einem Signaleingabemittel zum Empfang eines zusammengesetzten Videosignals mit einem Vertikalsynchronsignal in jeder vertikalen Periode und einem Horizontalsynchronsignal in jeder horizontalen Periode, einem im Wesentlichen während jeder horizontalen Periode in die aktiven Zeilen eingefügten Luminanzsignalanteil, einem mit einem Trägersignal modulierten und im Wesentlichen während jeder horizontalen Periode in den aktiven Zeilen mit dem Luminanzsignalanteil frequenzgemultiplexten Chrominanzsignalanteil und einem Farbburstsignal in einer hinteren Schwarzschulter jedes Horizontalsynchronsignals mit Ausnahme der vertikalen Austastlücke;
b) einem mit dem zusammengesetzten Videosignal versorgten ersten Signalverarbeitungsmittel zur Durchführung einer ersten Signalverarbeitung zum Ableiten des Luminanzsignalanteils und des Chrominanzsignalanteils; und
c) einem mit einem in Bezug zu dem zusammengesetzten Videosignal stehenden Signal versorgten zweiten Signalverarbeitungsmittel zur Durchführung einer zweiten Signalverarbeitung zur Verbesserung der durch das Fernsehsignal dargestellten Bildqualität;
**gekennzeichnet durch**
d) ein Signaltrennungsmittel zur Extrahierung eines in dem zusammengesetzten Videosignal enthaltenen zusätzlichen Steuersignals;
e) ein Detektormittel zur Feststellung eines Zustands des zusätzlichen Steuersignals, der anzeigt, ob das an das Signaleingabemittel angelegte zusammengesetzte Videosignal vor der Zuführung in einer Signalübertragungsstufe einer dritten Signalverarbeitung unterworfen wurde;
f) einem Steuermittel zum Abstellen des zweiten Signalverarbeitungsmittels, in dem sonst aufgrund der dritten Signalverarbeitung eine Signalverschlechterung verursacht werden kann, die zu einer Bildverschlechterung führt, wobei das zusätzliche Steuersignal ein digitales Codesignal mit einem Frequenzband gleich oder nahe dem des Farbburstsignals ist und in einer bestimmten Zeile angeordnet ist, und ein weiteres zusätzliches Signal mit der inversen Phase zu dem zusätzlichen Steuersignal oder kein Signal mit einem Frequenzband gleich oder nahe dem des zusätzlichen Steuersignals in einer Zeile, die zu der bestimmten Zeile einen bestimmten Abstand aufweist, an einer Stelle angeordnet ist, die der Position des zusätzlichen Steuersignals entspricht, und das Detektormittel das zusätzliche Steuersignal mit einem Referenzcodesignal vergleicht.

19. Videosignalverarbeitungseinrichtung nach Anspruch 17 oder 18, bei der die dritte Signalverarbeitung in der Signalübertragungsstufe eine Zeilenkammfilterung ist.

20. Videosignalverarbeitungseinrichtung nach Anspruch 19, bei der die Signalübertragungsstufe ein Videoband-Wiedergabegerät mit einem Zeilenkammfilter umfasst.

21. Videosignalverarbeitungseinrichtung nach Anspruch 17, 18, 19 oder 20, bei der das zusammengesetzte Videosignal weiter einen zusätzlichen Signalanteil umfasst, der Information zur Verbesserung der vertikalen Auflösung des durch den Luminanzsignalanteil dargestellten Bildes enthält, wobei das zweite Signalverarbeitungsmittel mit dem zusätzlichen Signalanteil versorgt wird und den zusätzlichen Signalanteil mit dem Luminanzsignalanteil kombiniert.

22. Videosignalverarbeitungseinrichtung nach Anspruch 21, bei der der zusätzliche Signalanteil mit dem Trägersignal moduliert ist.

23. Videosignalverarbeitungseinrichtung nach Anspruch 17, 18, 19 oder 20, bei der das zweite Signalverarbeitungsmittel mit dem Luminanzsignalanteil und dem Chrominanzsignalanteil versorgt wird, die einer ersten dreidimensionalen Signalverarbeitung unterworfen wurde, und eine zweite dreidimensionale Signalverarbeitung durchführt, die die erste dreidimensionale Signalverarbeitung umkehrt.

24. Videosignalverarbeiturigseinrichtung nach Anspruch 23, bei der die erste und die zweite dreidimensinale Signalverarbeitung jeweils eine Color Plus Codierung und eine Color Plus Decodierung sind.

## Revendications

1. Signal de télévision comprenant :
- un signal de synchronisation verticale pendant chaque période verticale et un signal de synchronisation horizontale pendant chaque période horizontale,
- une composante de signal de luminance insérée essentiellement pendant chaque période horizontale dans les lignes actives,
- une composante de signal de chrominance modulée par un signal de porteuse et multiplexée en fréquence avec la composante de signal de luminance essentiellement pendant chaque période horizontale des lignes actives, et
- un signal de salve de couleur dans une partie arrière de chaque signal de synchronisation horizontale, hormis la période de suppression verticale, et
- un signal additionnel de commande inséré dans une certaine période horizontale, le signal additionnel étant utilisé dans des premiers moyens de traitement de signal vidéo pour effectuer un premier traitement du signal, de manière à détecter si le signal de télévision envoyé aux premiers moyens de traitement du signal vidéo a été soumis à un second traitement de signal dans un étage de transmission de signaux situé en amont des premiers moyens de traitement du signal, de manière à interrompre le premier traitement du signal, par lequel une altération du signal peut se produire en entraînant une réduction de la qualité du signal due sinon au second traitement du signal,
le signal additionnel de commande étant un signal analogique alternatif ayant une bande de fréquences égale à ou proche de celle du signal de salve de couleur et étant situé sur une certaine ligne, tandis qu'un autre signal additionnel possédant la phase inverse de celle du signal additionnel de commande est situé, ou aucun signal possédant une bande de fréquences égale à ou proche de celle du signal additionnel de commande est situé en un emplacement correspondant à l'endroit où le signal additionnel de commande n'est situé dans une ligne, en étant séparé de cette certaine ligne par une certaine distance.

2. Signal de télévision comprenant :
- un signal de synchronisation verticale dans chaque période verticale, et
- un signal de synchronisation horizontale dans chaque période horizontale,
- une composante de signal de luminance insérée essentiellement pendant chaque période horizontale dans les lignes actives,
- une composante de signal de chrominance modulée par un signal de porteuse et multiplexée en fréquence avec la composante de signal de luminance essensiellement pendant chaque période horizontale des lignes actives, et un signal de salve de couleur dans une partie arrière de chaque signal de synchronisation horizontale, hormis la période de suppression verticale,
- un signal additionnel de commande inséré dans une certaine période horizontale, le signal additionnel étant utilisé dans des premiers moyens de traitement de signal vidéo pour effectuer un premier traitement du signal, de manière à détecter si le signal de télévision envoyé aux premiers moyens de traitement du signal vidéo a été soumis à un second traitement de signal dans un étage de transmission de signaux situé en amont des premiers moyens de traitement du signal, de manière à interrompre le premier traitement du signal, par lequel une altération du signal peut se produire en entraînant une réduction de la qualité du signal due sinon au second traitement du signal,
le signal additionnel de commande étant un signal de code numérique possédant une bande de fréquences égale au ou proche du signal de salve de couleur et étant situé sur une certaine ligne, tandis qu'un autre signal additionnel possédant la phase inverse de celle du signal additionnel de commande est située, ou aucun signal possédant une bande de fréquences égale à ou proche de celle du signal additionnel de commande n'est situé en un emplacement correspondant à l'endroit où le signal additionnel de commande est situé dans une ligne, en étant séparé de cette certaine ligne par une certaine distance.

3. Signal de télévision selon l'une quelconque des revendications précédentes, comprenant en outre une composante de signal additionnel incluant une information améliorant la résolution verticale de l'image représentée par la composante de signal de luminance, le premier traitement du signal combinant la composante de signal additionnel à la composante de signal de luminance.

4. Signal de télévision selon la revendication 3, dans lequel la composante de signal additionnel est modulée par le signal de porteuse.

5. Signal de télévision selon la revendication 1 ou 2, dans lequel la composante de signal de luminance et la composante de signal de chrominance sont soumises à un troisième traitement de signal correspondant au premier traitement du signal.

6. Signal de télévision selon la revendication 5, dans lequel le troisième traitement du signal est un codage couleur plus et le premier traitement de signal est un décodage couleur plus correspondant au codage couleur plus.

7. Signal de télévision selon l'une quelconque des revendications précédentes, dans lequel le second traitement du signal dans l'étage de transmission du signal est un filtrage par un filtre en peigne linéaire.

8. Signal de télévision selon l'une quelconque des revendications précédentes, dans lequel l'étage de transmission de signaux comprend un lecteur de bande vidéo possédant un filtre en peigne linéaire.

9. Procédé pour transmettre un signal de télévision comprenant les étapes consistant à :
- produire un signal de synchronisation verticale pendant chaque période verticale et un signal de synchronisation horizontale pendant chaque période horizontale;
- produire une composante de signal de luminance à partir d'un signal d'image, et
- insérer la composante du signal de luminance essentiellement pendant chaque période horizontale, dans les lignes actives;
- produire une composante de signal de chrominance à partir du signal d'image,
- moduler la composante de signal de chrominance par un signal de porteuse,
- multiplexer en fréquence la composante de signal de chrominance modulée avec la composante du signal de luminance essentiellement pendant chaque période horizontale, dans les lignes actives; et
- produire un signal de salve de couleur et insérer le signal de salve de couleur dans un palier arrière de chaque signal de synchronisation horizontale, hormis la période de suppression verticale, et
- produire un signal de commande additionnel devant être utilisé dans des premiers moyens de traitement du signal vidéo pour exécuter un premier traitement du signal, afin de détecter si le signal vidéo envoyé aux premiers moyens de traitement du signal vidéo a été soumis à un second traitement de signal dans un étage de transmission du signal situé en amont des premiers moyens de traitement du signal, de manière à interrompre le premier traitement du signal, par lequel une altération du signal peut être produite en entraînant une altération de la qualité du signal due sinon au second traitement du signal, le signal de commande additionnel étant un signal analogique alternatif, et comprenant en outre l'étape consistant à insérer un signal de commande additionnel possédant une bande de fréquences égale à ou proche de celle du signal de salve de couleur dans une certaine ligne, et un autre signal additionnel possédant la phase inverse de celle du signal de commande additionnel ou aucun signal ayant une bande de fréquences égale à ou proche de celle du signal de commande additionnel en un emplacement correspondant à l'endroit où le signal de commande additionnel est situé dans une ligne en étant séparé de la certaine ligne par une certaine distance.

10. Procédé pour transmettre un signal de télévision comprenant les étapes consistant à :
- produire un signal de synchronisation verticale pendant chaque période verticale et un signal de synchronisation horizontale pendant chaque période horizontale;
- produire une composante de signal de luminance à partir d'un signal d'image, et
- insérer la composante du signal de luminance essentiellement pendant chaque période horizontale, dans les lignes actives;
- produire une composante de signal de chrominance à partir du signal d'image,
- moduler la composante de signal de chrominance par un signal de porteuse,
- multiplexer en fréquence la composante de signal de chrominance modulée avec la composante du signal de luminance essentiellement pendant chaque période horizontale, dans les lignes actives; et
- produire un signal de salve de couleur et insérer le signal de salve de couleur dans une partie arrière de chaque signal de synchronisation horizontale, hormis la période de suppression verticale, et
- produire un signal de commande additionnel devant être utilisé dans des premiers moyens de traitement du signal vidéo pour exécuter un premier traitement du signal, afin de détecter si le signal vidéo envoyé aux premiers moyens de traitement du signal vidéo a été soumis à un second traitement de signal dans un étage de transmission du signal situé en amont des premiers moyens de traitement du signal, de manière à interrompre le premier traitement du signal, par lequel une altération du signal peut être produite en entraînant une altération de la qualité du signal due sinon au second traitement du signal, le signal de commande additionnel étant un signal de code numérique,
et comprenant en outre l'étape consistant à insérer un signal de commande additionnel possédant une bande de fréquences égale à ou proche de celle du signal de salve de couleur dans une certaine ligne, et un autre signal additionnel possédant la phase inverse de celle du signal de commande additionnel ou aucun signal ayant une bande de fréquences égale à ou proche de celle du signal de commande additionnel en un emplacement correspondant à l'endroit où le signal de commande additionnel est situé dans une ligne en étant séparé de la certaine ligne par une certaine distance.

11. Procédé selon la revendication 9 ou 10, comprenant en outre l'étape consistant à produire une composante de signal additionnel incluant une information améliorant la résolution verticale de l'image représentée par la composante de signal de luminance, le premier traitement du signal combinant la composante de signal additionnel à la composante du signal de luminance.

12. Procédé selon la revendication 11, comprenant en outre l'étape consistant à moduler la composante de signal additionnel par le signal de porteuse.

13. Procédé selon la revendication 9 ou 10, comprenant en outre l'étape consistant à soumettre la composante de signal de luminance et la composante de signal de chrominance à un troisième traitement du signal correspondant au premier traitement du signal.

14. Procédé selon la revendication 13, selon lequel le troisième traitement du signal est un codage couleur plus et le premier traitement du signal est un codage couleur plus correspondant au décodage positif de couleurs.

15. Procédé selon la revendication 11, 12, 13 ou 14, selon lequel le second traitement du signal dans l'étage de transmission de signal est un filtrage effectué avec un filtre en peigne linéaire.

16. Procédé selon la revendication 11, 12, 13, 14 ou 15, selon lequel l'étage de transmission du signal comprend un lecteur de bande vidéo possédant un filtre en peigne linéaire.

17. Appareil de traitement de signaux vidéo comprenant :
a) des moyens d'entrée du signal servant à recevoir un signal vidéo composite incluant un signal de synchronisation verticale dans chaque période verticale et un signal de synchronisation horizontale dans chaque période horizontale, une composante de signal de luminance insérée essentiellement pendant chaque période horizontale dans les lignes actives, et une composante de signal de chrominance modulée par un signal de porteuse et multiplexée en fréquence avec la composante de signal de luminance essentiellement pendant chaque période horizontale dans les lignes actives et un signal de salve de couleur dans un palier arrière de chaque signal de synchronisation horizontale, hormis la période de suppression verticale,
b) des premiers moyens de traitement de signaux alimentés par le signal vidéo composite et servant à exécuter un premier traitement du signal pour obtenir la composante de signal de luminance et la composante de signal de chrominance; et
c) des seconds moyens de traitement du signal alimentés par un signal associé au signal vidéo composite et servant à exécuter un second traitement du signal pour améliorer la qualité de l'image représentée par le signal de télévision;
caractérisé par :
d) des moyens de séparation du signal pour extraire un signal de commande additionnel inclus dans le signal vidéo composite;
e) des moyens de détection servant à détecter une condition du signal de commande additionnel indiquant si le signal vidéo composite envoyé aux moyens d'entrée du signal a été soumis à un troisième traitement du signal dans un étage de transmission du signal, avant d'être délivré;
f) des moyens de commande pour invalider des seconds moyens de traitement du signal, dans lesquels une altération du signal peut être provoquée pour entraîner une altération de la qualité de l'image due par ailleurs au troisième traitement de signal, le signal de commande additionnel étant un signal analogique alternatif et lesdits moyens de détection détectant le niveau du signal de commande additionnel, et comprenant en outre des moyens de détection du signal de salve de couleur pour extraire le signal de salve de couleur, le signal de commande additionnel possédant une bande de fréquences égale à ou proche de celle du signal de salve de couleur dans une certaine ligne et tandis qu'un autre signal additionnel possédant la phase inverse de celle du signal de commande additionnel est situé, ou aucun signal présentant la bande de fréquences égale à ou proche de celle du signal de commande additionnel n'est situé en un emplacement correspondant à l'endroit où le signal de commande additionnel est situé dans une ligne, en étant séparé de la certaine ligne par une certaine distance, et lesdits moyens de détection comparant le niveau du signal de commande additionnel au niveau du signal de salve de couleur en tant que niveau de référence.

18. Appareil de traitement de signal vidéo, comprenant :
a) des moyens d'entrée du signal servant à recevoir un signal vidéo composite incluant un signal de synchronisation verticale dans chaque période verticale et un signal de synchronisation horizontale dans chaque période horizontale, une composante de signal de luminance insérée essentiellement pendant chaque période horizontale dans les lignes actives, et une composante de signal de chrominance modulée par un signal de porteuse et multiplexée en fréquence avec la composante de signal de luminance essentiellement pendant chaque période horizontale dans les lignes actives et un signal de salve de couleur dans une partie arrière de chaque signal de synchronisation horizontale, hormis la période de suppression verticale,
b) des premiers moyens de traitement de signaux alimentés par le signal vidéo composite et servant à exécuter un premier traitement du signal pour obtenir la composante de signal de luminance et la composante de signal de chrominance; et
c) des seconds moyens de traitement du signal alimentés par un signal associé au signal vidéo composite et servant à exécuter un second traitement du signal pour améliorer la qualité de l'image représentée par le signal de télévision;
caractérisé par :
d) des moyens de séparation du signal pour extraire un signal de commande additionnel inclus dans le signal vidéo composite;
e) des moyens de détection servant à détecter une condition du signal de commande additionnel indiquant si le signal vidéo composite envoyé aux moyens d'entrée du signal a été soumis à un troisième traitement du signal dans un étage de transmission du signal, avant d'être délivré;
f) des moyens de commande pour invalider des seconds moyens de traitement du signal, dans lesquels une altération du signal peut être produite en entraînant une altération de la qualité de l'image due par ailleurs au troisième traitement de signal, le signal de commande additionnel étant un signal de code numérique possédant une bande de fréquences égale à ou proche de celle du signal de salve de couleur dans une certaine ligne et un autre signal additionnel possédant la phase inverse de celle du signal de commande additionnel est situé, ou aucun signal présentant la bande de fréquences égale à ou proche de celle du signal de commande additionnel n'est situé en un emplacement correspondant à l'endroit où le signal de commande additionnel est situé dans une ligne, en étant séparé de la certaine ligne par une certaine distance, et lesdits moyens de détection comparant le signal de commande additionnel à un signal de code de référence.

19. Appareil de traitement de signal vidéo selon la revendication 17 ou 18, dans lequel le troisième traitement du signal dans l'étage de transmission du signal est un filtrage exécuté au moyen d'un filtre en peigne linéaire.

20. Appareil de traitement de signaux vidéo selon la revendication 19, dans lequel l'étage de transmission de signaux comprend un lecteur de bande vidéo possédant un filtre en peigne linéaire.

21. Appareil de traitement de signaux vidéo selon la revendication 17, 18, 19 ou 20, dans lequel le signal vidéo composite comprend en outre une composante de signal additionnel incluant une information améliorant la résolution verticale de l'image représentée par la composante du signal de luminance, et lesdits seconds moyens de traitement du signal sont alimentés par la composante de signal additionnel et combinent la composante de signal additionnel à la composante de signal de luminance.

22. Appareil de traitement de signaux vidéo selon la revendication 21, dans lequel la composante de signal additionnel est modulée par le signal de porteuse.

23. Appareil de traitement de signaux vidéo selon la revendication 17, 18, 19 ou 20, dans lequel lesdits seconds moyens de traitement du signal sont alimentés par la composante de signal de luminance et la composante de signal de chrominance, qui a été soumise au premier traitement tridimensionnel de signal et exécutent un second traitement tridimensionnel de signal d'une manière inverse du premier traitement tridimensionnel du signal.

24. Appareil de traitement de signaux vidéo selon la revendication 23, dans lequel les premier et second traitements tridimensionnels du signal sont respectivement un codage et un décodage positifs de couleurs.
